# EUROPÄISCHE PATENTSCHRIFT

(11) **EP 1 623 943 B1**
(45) Veröffentlichungstag und Bekanntmachung des Hinweises auf die Patenterteilung: **01.06.2011**
(21) Anmeldenummer: 04018453.3
(22) Anmeldetag: 04.08.2004
(51) Int. Cl.: B65H 23/02, G01N 21/89

(54) **Vorrichtung und Verfahren zur Erfassung eines Merkmals einer laufenden Materialbahn**
Device and method for detecting a feature of a running material web
Dispositif et méthode pour détecter une caractéristique d'une bande en mouvement

(43) Veröffentlichungstag der Anmeldung: 08.02.2006
(73) Patentinhaber: FMS Force Measuring Systems AG, 8154 Oberglatt (CH)
(72) Erfinder: Inhelder, Jörg, 8180 Bülach (CH); Steininger, Roland, 8050 Zürich (CH)
(74) Vertreter: Zeuner Summerer Stütz

(56) Entgegenhaltungen:
- EP-A- 0 711 995
- EP-A- 1 300 353
- US-B1- 6 566 670

## Beschreibung

### Technisches Gebiet

Die Erfindung betrifft das Gebiet der Regelung laufender Materialbahnen und betrifft insbesondere eine Vorrichtung und ein Verfahren zur Erfassung eines sich im Wesentlichen in Bahnlängsrichtung erstreckenden Merkmals einer laufenden Materialbahn, wie der Randkante der Materialbahn oder einer auf die Materialbahn aufgedruckten Markierungslinie.

### Stand der Technik

Bei der Herstellung und Verarbeitung flächenförmiger Materialbahnen, wie etwa Papierbahnen oder Folien aus Kunststoff oder Metall, werden die Materialbahnen zwischen rotierenden Walzen geführt und transportiert. Zur exakten Führung und Ausrichtung der Bahnen wird ein Regelkreis verwendet, bei dem die seitliche Lage der Materialbahn die Regelgröße darstellt.

Ein optischer Sensor oder ein Ultraschallsensor erfasst kontinuierlich die Lage eines sich in Bahnlängsrichtung erstreckenden Merkmals, typischerweise der Randkante der Materialbahn oder einer aufgedruckten Markierungslinie. Aus der erfassten Lage der Markierung berechnet ein Bahnlaufregler die Abweichung der Bahn von einer vorgegebenen Sollposition und steuert, falls erforderlich, einen das Stellglied bildenden Drehrahmen so an, dass die Materialbahn seitlich wieder auf ihre Sollposition zurückgeführt wird.

Optische Liniensensoren für die Regelung einer Materialbahn an einer gedruckten Linie oder einer Materialkante sind bekannt. Bei einem derartigen optischen Liniensensor erzeugt ein Lichtsender im Sensor auf der Oberfläche des abzutastenden Materials einen Lichtfleck. Das reflektierte Licht wird von zwei dreieckigen Photodioden aufgenommen und in einer analogen Schaltung ausgewertet. Vor dem Betrieb muss der Liniensensor auf den Farbkontrast des abzutastenden Materials eingestellt werden. Dazu wird der Sensor von Hand auf einer auf der Materialbahn aufgedruckten Linie positioniert und der Elektronik eine bestimmte Tastenfolge eingegeben. Dann wird der Sensor auf den Hintergrund gerichtet und der Elektronik eine weitere Tastenfolge eingegeben. Der Sensor ist dann betriebsbereit und korrekt eingestellt. Derartige Sensoren sind zuverlässig und robust, allerdings bestehen Einschränkungen bei der zulässigen Linienbreite der gedruckten Linien, sowie beim Erkennen verschiedener Kontraste.

Die Druckschrift EP 0711 995 A2 betrifft eine als linearer Integrations-Hohlraum ausgebildete Lichtquelle zur Infrarot-Beleuchtung sensibilisierter Materialien und beschreibt insbesondere eine Infrarot-Beleuchtungsquelle zur Erfassung von Fehlstellen in beschichteten photographischen Filmen, die ein besonders gleichmäßiges Beleuchtungsprofil ermöglicht. Dazu wird die Filmbahn über einen linearen Lichtintegrator beleuchtet, der von einer Leuchtdloden-Linienzeile gespeist wird. Um das gleichmäßige Beleuchtungsprofil zu erreichen, sind die Leuchtdioden in getrennt ansteuerbare Gruppen aufgeteilt, wobei im Extremfall jede Leuchtdiode einzeln ansteuerbar sein kann. Das durch die Filmbahn transmittierte Licht wird von einer CCD-Kamera aufgenommen und geeignet ausgewertet.

Die Druckschrift US 6 566 670 B1 beschreibt ein System zur Führung einer laufenden Materialbahn, das als Beleuchtungsquellen vier mehrfarbige Leuchtdioden enthält, die an unterschiedlichen Positionen relativ zu dem Fokuspunkt auf der Materialbahn angeordnet sind. Zum Betrieb des Systems wird von einem Bediener entsprechend der Reflexionseigenschaften der Materialbahn (matt, glänzend oder holographisch) die erste (für matte Bahnen), die zweite (für glänzende Bahnen) oder die dritte und vierte Leuchtdiode gemeinsam (für Bahnen mit holographischen Eigenschaften) ausgewählt. Weiter wird die Farbe der ausgewählten Leuchtdiode (Rot, Blau, Grün oder Infrarot) je nach Art der Materialbahn und Farbe der nachzuverfolgenden Linie eingestellt.

### Darstellung der Erfindung

Hier setzt die Erfindung an. Der Erfindung, wie sie in den Ansprüchen gekennzeichnet ist, liegt die Aufgabe zugrunde, die Nachteile des Stands der Technik zu vermeiden und insbesondere eine gattungsgemäße Vorrichtung anzugeben, die eine einfache und zuverlässige Erfassung einer Vielzahl unterschiedlicher Merkmale laufender Materialbahnen ermöglicht.

Diese Aufgabe wird erfindungsgemäß durch die Vorrichtung mit den Merkmalen des Anspruchs 1 oder 13 gelöst. Zugehörige Verfahren sind in den nebengeordneten Ansprüchen 8, 16 und 17 angegeben. Weiterbildungen der Erfindung sind Gegenstand der Unteransprüche.

Erfindungsgemäß umfasst eine Vorrichtung der eingangs genannten Art
- eine Mehrzahl einzeln ansteuerbarer Lichtquellen zur Beleuchtung eines das zu erfassende Merkmal enthaltenden Abschnitts der Materialbahn in einer von mehreren verschiedenen Beleuchtungskonfigurationen,
- eine ortsauflösende Detektionseinheit zur Aufnahme des von dem beleuchteten Abschnitt als optische Antwort emittierten Lichts und zur Übermittlung eines dem aufgenommenen Licht entsprechenden Datensignals an eine Auswerteeinheit,
- eine Auswerteeinheit zur Bestimmung einer oder mehrerer charakteristischer Kenngrößen des zu erfassenden Merkmals aus dem übermittelten Datensignal, und
- einer Auswahleinheit zur automatischen Bestimmung einer optimalen Beleuchtungskonfiguration, die ausgelegt und eingerichtet ist, die Lichtquellen in verschiedenen Beleuchtungskonfigurationen anzusteuem, die jeweils bestimmten charakteristischen Kenngrößen des zu erfassenden Merkmals nach einem vorgewählten Kriterium zu bewerten und auf Grundlage dieser Bewertung die optimale Beleuchtungskonfiguration für die weitere Erfassung zu bestimmen.

Die von der Auswahleinheit bestimmte optimale Beleuchtungskonfiguration kann angezeigt und nach Bestätigung durch einen Benutzer für die weitere Erfassung verwendet werden. Vorzugsweise wird die optimale Beleuchtungskonfiguration jedoch automatisch, also ohne weiteren Benutzereingriff für die weitere Erfassung eingesetzt. In einer weiteren Variante wird die optimale Beleuchtungskonfiguration in der Regel automatisch verwendet und nur in Ausnahmefällen, etwa wenn die Bewertung unterhalb eines vorgegebenen Mindestwerts liegt, eine Benutzereingabe angefordert.

Die einzeln ansteuerbaren Lichtquellen sind bevorzugt durch einfarbige Leuchtdioden gebildet, wobei die Mehrzahl der Lichtquellen besonders bevorzugt Leuchtdioden verschiedener Farben umfasst. Als Farben der Leuchtdioden kommen beispielsweise Rot, Orange, Gelb, Grün, Blau und Weiß, aber auch Farben außerhalb des sichtbaren Spektralbereichs, wie Infrarot oder Ultraviolett in Frage.

In einer zweckmäßigen Ausgestaltung der erfindungsgemäßen Vorrichtung sind die einzeln ansteuerbaren Lichtquellen in verschiedenen Positionen relativ zu dem zu erfassenden Merkmal angeordnet. Dadurch kann besonderen Reflexionseigenschaften der Materialbahn oder des zu erfassenden Merkmals Rechnung getragen werden, wie etwa einem spiegelnden, diffus reflektierenden oder einem nur in bestimmte Richtungen reflektierenden, beispielsweise holographischem Charakter der Materialbahn und/oder des zu erfassenden Merkmals.

Als optische Antwort auf die Beleuchtung emittiert der beleuchtete Materialbahnabschnitt Licht, das von der ortsauflösenden Detektionseinheit aufgenommen wird. In der Regel wird das emittierte Licht durch das von der Materialbahn diffus oder gerichtet reflektierte Licht gebildet. Im Rahmen der Erfindung kommen jedoch auch andere Emissionsprozesse der Materialbahn oder des Merkmals, wie etwa eine Fluoreszenzemission in Frage. Beispielsweise kann eine Markierungslinie mit fluoreszierender Farbe auf der Materialbahn aufgedruckt sein, und die Fluoreszenz der Markierungslinie durch einen ultravioletten Anteil des Beleuchtungsspektrums angeregt werden.

Die ortsauflösende Detektionseinheit kann durch eine Mehrzahl nebeneinander angeordneter Photodioden oder bevorzugt durch eine Mehrzahl nebeneinander angeordneter CCD-Elemente, wie etwa eine CCD-Zeile gebildet sein. Eine solche CCD-Zeile ist für die Erfassung eines Bereichs senkrecht zur Erstreckungsrichtung des Merkmals und zur Bestimmung seiner charakteristischen Eigenschaften sehr gut geeignet, wobei sich mit relativ kurzen CCD-Zeilen, beispielsweise mit 64, 128 oder 256 Pixelelementen, preiswerte und schnelle Detektionseinheiten verwirklichen lassen, die eine für die Erfassung typischer Merkmale laufender Materialbahnen ausreichend hohe Ortsauflösung aufweisen.

In einer vorteilhaften Ausgestaltung der erfindungsgemäßen Vorrichtung enthält die Auswerteeinheit zur Bestimmung der charakteristischen Kenngrößen einen digitalen Signalprozessor, der eine flexible Auswertung der Merkmalseigenschaften und die Verfolgung des Merkmals in Echtzeit ermöglicht.

Die Auswerteeinheit bestimmt mit Vorteil als charakteristische Kenngröße den Merkmalskontrast in Bahnquerrichtung und gegebenenfalls als weitere Kenngrößen die Polarität des Helligkeitswechsels des Merkmals in Bahnquerrichtung und/oder die Linienbreite einer aufgebrachten Markierungslinie. Bei einer Markierungskante oder einer Bahnkante kann als Merkmalskontrast die Differenz der Helligkeitswerte beiderseits der Kante und außerhalb eines Übergangsbereichs gewisser Breite verwendet werden. Für Markierungslinien können die beiden Linienkanten getrennt behandelt, und als Gesamtkontrast beispielsweise der Minimalwert, der Maximalwert oder der Mittelwert der Kontrastwerte der beiden Kanten verwendet werden. Die Polarität des Helligkeitswechsels gibt den Übergang hell -> dunkel oder dunkel -> hell an. Die Linienbreite ist durch den Abstand zweier erfasster Linienkanten gegeben.

Zumindest ein Teil der charakteristischen Kenngrößen kann nach einer Fouriertransformation des Datensignals auch im Frequenzraum bestimmt werden. Geeignete Verfahren, insbesondere zur schnellen Fouriertransformation (FFT) und zur digitalen Filterung und Signalverarbeitung im Frequenzraum sind dem Fachmann bekannt.

Abschließend bestimmt die Auswahleinheit mit Vorteil diejenige Beleuchtungskonfiguration als optimale Beleuchtungskonfiguration für die weitere Erfassung, die einen maximalen Merkmalskontrast aufweist. Vorzugsweise wird diese Beleuchtungskonfiguration automatisch für die weitere Erfassung verwendet. Falls gewünscht, kann die als optimal festgestellte Beleuchtungskonfiguration auch angezeigt und erst nach einer Benutzerbestätigung eingestellt werden.

Die Erfindung enthält in einem zweiten Aspekt eine Vorrichtung der eingangs genannten Art mit
- einer Beleuchtungseinheit zur Beleuchtung eines das zu erfassende Merkmal enthaltenden Abschnitts der Materialbahn,
- einer ortsauflösenden Detektionseinheit zur Aufnahme des von dem beleuchteten Abschnitt als optische Antwort emittierten Lichts in einer von mehreren verschiedenen einstellbaren Detektionskonfigurationen, und zur Übermittlung eines dem aufgenommenen Licht entsprechenden Datensignals an eine Auswerteeinheit,
- einer Auswerteeinheit zur Bestimmung einer oder mehrerer charakteristischer Kenngrößen des zu erfassenden Merkmals aus dem übermittelten Datensignal, und
- einer Auswahleinheit zur automatischen Bestimmung einer optimalen Detektionskonfiguration, die ausgelegt und eingerichtet ist, die Detektionseinheit in verschiedenen der einstellbaren Detektionskonfigurationen anzusteuern, die jeweils bestimmten charakteristischen Kenngrößen des zu erfassenden Merkmals nach einem vorgewählten Kriterium zu bewerten und auf Grundlage dieser Bewertung die optimale Detektionskonfiguration für die weitere Erfassung zu bestimmen.

In einer vorteilhaften Ausgestaltung enthält die Detektionseinheit ein einstellbares Farbfilter, dessen verschiedene Filtereinstellungen zu den verschiedenen einstellbaren Detektionskonfigurationen führen. Alternativ kann die Detektionseinheit mehrere wahlweise auslesbare Detektionselemente mit verschiedener spektraler Empfindlichkeit enthalten. Bei dieser Variante führt die Auswahl der auszulesenden Detektionselemente zu den verschiedenen einstellbaren Detektionskonfigurationen der Detektionseinheit. Die Auswahl der Detektionskonfiguration kann dabei auch erst nach dem Auslesen der Detektionselemente stattfinden. Beispielsweise können Detektionselemente mit verschiedener spektraler Empfindlichkeit in regelmäßiger Abfolge angeordnet sein und gemeinsam ausgelesen werden, wobei je nach Detektionskonfiguration nur die Datensignale einer bestimmten Art von Detektionselementen für die Auswertung der charakteristischen Kenngrößen verwendet werden.

In allen Varianten des zweiten Erfindungsaspekts wird bei der Kalibrierung der Vorrichtung ein das zu erfassende Merkmal enthaltender Abschnitt der Materialbahn beleuchtet, das von dem beleuchteten Abschnitt als optische Antwort emittierte Licht in einer von mehreren verschiedenen einstellbaren Detektionskonfigurationen ortsaufgelöst erfasst, und ein dem aufgenommenen Licht entsprechendes Datensignal erzeugt. Aus dem erzeugten Datensignal werden eine oder mehrere charakteristische Kenngrößen des zu erfassenden Merkmals bestimmt. Zur automatischen Bestimmung einer optimalen Detektionskonfiguration wird die Detektionseinheit dabei in verschiedenen der einstellbaren Detektionskonfigurationen angesteuert, die jeweils bestimmten charakteristischen Kenngrößen des zu erfassenden Merkmals werden nach einem vorgewählten Kriterium bewertet und die optimale Detektionskonfiguration für die weitere Erfassung wird auf Grundlage dieser Bewertung bestimmt.

Die beiden geschilderten Erfindungsaspekte können auch kombiniert werden, um eine gattungsgemäße Vorrichtung zu schaffen, die sowohl eine einstellbare Beleuchtungskonfiguration, als auch eine einstellbare Detektionskonfiguration aufweist.

In diesem Fall wird bei der Erfassung eines Merkmals einer laufenden Materialbahn ein das zu erfassende Merkmal enthaltender Abschnitt der Materialbahn von einer oder mehreren einzeln ansteuerbaren Lichtquellen in einer ausgewählten Beleuchtungskonfiguration beleuchtet. Das von dem beleuchteten Abschnitt als optische Antwort emittierte Licht wird in einer von mehreren verschiedenen einstellbaren Detektionskonfigurationen ortsaufgelöst erfasst, und ein dem aufgenommenen Licht entsprechendes Datensignal erzeugt. Aus dem erzeugten Datensignal werden dann eine oder mehrere charakteristische Kenngrößen des zu erfassenden Merkmals bestimmt. Zur automatischen Bestimmung einer optimalen Kombination von Beleuchtungskonfiguration und Detektionskonfiguration
- werden die Lichtquellen in verschiedenen Beleuchtungskonfigurationen angesteuert,
- wird für jede Beleuchtungskonfiguration die Detektionseinheit in verschiedenen der einstellbaren Detektionskonfigurationen angesteuert,
- werden die jeweils bestimmten charakteristischen Kenngrößen des zu erfassenden Merkmals nach einem vorgewählten Kriterium bewertet, und
- wird auf Grundlage dieser Bewertung die optimale Kombination von Beleuchtungskonfiguration und Detektionskonfiguration für die weitere Erfassung bestimmt.

Nachfolgend soll die Erfindung anhand eines Ausführungsbeispiels im Zusammenhang mit den Zeichnungen näher erläutert werden. Dabei sind nur die für das Verständnis der Erfindung wesentlichen Elemente dargestellt. Es zeigt
- Fig. 1: ein Blockschaltbild eines digitalen Liniensensors nach einem Ausführungsbeispiel der Erfindung,
- Fig. 2: zwei Diagramme zur Erläuterung der Bestimmung der charakteristischen Kenngrößen einer Markierungslinie,
- Fig. 3: ein Blockschaltbild eines digitalen Liniensensors nach einem anderen Ausführungsbeispiel der Erfindung, und
- Fig. 4: ein Blockschaltbild eines digitalen Liniensensors nach einem weiteren Ausführungsbeispiel der Erfindung.

### Wege zur Ausführung der Erfindung

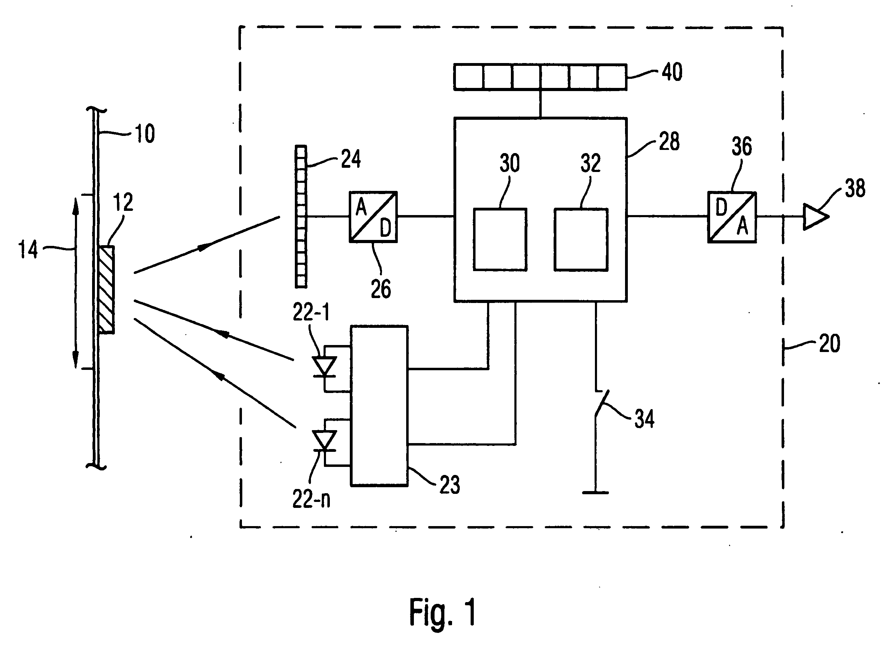

Figur 1 zeigt ein Blockschaltbild eines digitalen Liniensensors 20 nach einem Ausführungsbeispiel der Erfindung, der die Lage einer aufgedruckten Markierungslinie 12 auf einer Materialbahn 10 erfasst.

Der Liniensensor 20 enthält dazu eine Mehrzahl einzeln ansteuerbarer, verschiedenfarbiger Leuchtdioden 22-1 ... 22-n, die der Beleuchtung eines die Markierungslinie 12 enthaltenden Abschnitts 14 der Materialbahn 10 dienen. Der übersichtlicheren Darstellung halber sind in der Fig. 1 nur zwei Leuchtdioden gezeigt. In der Praxis hat sich allerdings die Verwendung von drei oder vier superhellen Leuchtdioden verschiedener Farben bewährt. Auch eine größere Zahl an Leuchtdioden liegt selbstverständlich im Rahmen der Erfindung. Wie weiter unten genauer beschrieben, wird für die Beleuchtung einer Materialbahn/Markierungs-Kombination eine bestimmte Beleuchtungskonfiguration verwendet, die aus einer oder mehreren der Leuchtdioden 22-1 ... 22-n besteht. Jede für die Beleuchtung einsetzbare Kombination der Leuchtdioden 22-1 ... 22-n bildet dabei eine mögliche Beleuchtungskonfiguration.

Das von dem beleuchteten Abschnitt 14 der Materialbahn 10 reflektierte Licht wird von einer CCD-Zeile 24 aufgenommen, die im Ausführungsbeispiel 128 Pixel enthält. Sowohl bei der Beleuchtung als auch bei der Detektion der erfassten Strahlung können in der Fig. 1 nicht dargestellte optische Elemente, insbesondere Linsen und/oder Spiegel in den Strahlengang eingebracht sein, um die Ausleuchtung der Markierung 12 und der CCD-Zeile 24 zu verbessern.

Die CCD-Zeile 24 ist so angeordnet und ausgerichtet, dass sie einen Bereich senkrecht zur Längserstreckungsrichtung der Markierungslinie 12 erfasst, dessen Breite (Querausdehnung) größer als die Linienbreite ist. Beispielsweise erfasst die CCD-Zeile 24 im Ausführungsbeispiel einen 8 mm breiten Bereich auf der Materialbahn 10 und kann so Markierungslinien mit Linienbreiten zwischen 0,5 mm und etwa 6 mm gut erfassen und verfolgen.

Die Ausgangssignale der CCD-Zeile 24 werden, beispielsweise mit einer Taktfrequenz von 1 MHz, ausgelesen und einem schnellen Analog-Digital-Wandler 26 zugeführt. Die digitalisierten Werte werden in einen digitalen Signalprozessor (DSP) 28 eingelesen und zwischengespeichert. Sind alle Pixelwerte der CCD-Zeile 24 ausgelesen und im digitalen Signalprozessor 28 gespeichert, so ermittelt die Auswerteeinheit 30 des Signalprozessors 28 programmgesteuert die vorbestimmten charakteristischen Kenngrößen für die Markierungslinie 12.

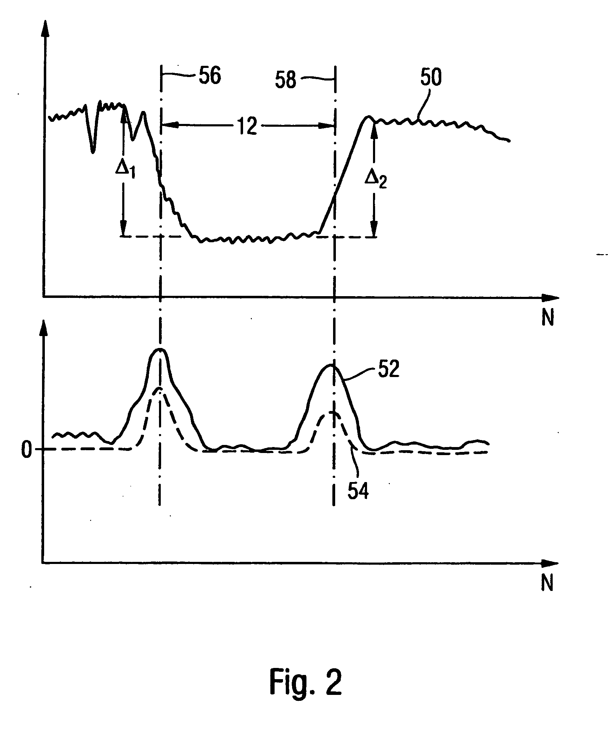

Im Ausführungsbeispiel werden als charakteristische Kenngrößen der Kontrast, die Polarität und die Linienbreite der Markierungslinie 12 bestimmt. Die Bestimmung dieser Kenngrößen wird nun mit Bezug auf Fig. 2 näher erläutert. Figur 2 zeigt dazu im oberen Bildteil schematisch eine typische Rohdatenkurve 50 der von der CCD-Zeile 24 gelieferten Helligkeitswerte bei der Erfassung einer Markierungslinie 12. Zur Glättung der Rohdatenkurve und zur Eliminierung einzelner Ausreißerpunkte wird zunächst ein Medianfilter 5. Ordnung auf die Rohdatenwerte angewendet. Um hochfrequentes Rauschen auszufiltern, wird dann ein Tiefpass 1. Ordnung vorwärts und, um die erzeugte Phasenverschiebung auszugleichen, ein Tiefpass 1. Ordnung rückwärts angewendet. Anschließend wird die Ableitung der Datenkurve gebildet und durch Betragsbildung gleichgerichtet, um die Positionen mit maximaler Helligkeitsänderungen zu bestimmen. Die so erhaltene Datenkurve ist in der unteren Bildhälfte der Fig. 2 durchgezogen gezeichnet und mit dem Bezugszeichen 52 versehen.

Zuletzt wird die Datenkurve 52 noch bei Signalwerten unterhalb eines bestimmten Schwellenwerts Sₜₕᵣₑₛ abgeschnitten (Sₙₑᵤ = 0, falls Sₐₗₜ < Sₜₕᵣₑₛ; andernfalls Sₙₑᵤ = Sₐₗₜ - Sₜₕᵣₑₛ), um Signalsteilheiten unterhalb einer gewissen Grenze unberücksichtigt zu lassen. Die so erhaltene Ergebniskurve 54 ist in Fig. 2 gestrichelt eingezeichnet.

Die Orte 56 und 58 der Maxima der Ergebniskurve 54 werden als die Positionen der beiden Kanten des Linienmerkmals betrachtet, und daraus die Linienbreite und die momentane Lage der Line bestimmt. Darüber hinaus wird für die beiden Kanten 56, 58 die Polarität des Helligkeitsübergangs (hell -> dunkel für die Kante 56, dunkel -> hell für die Kante 58), sowie als Merkmalskontrast die Differenz der Helligkeitswerte außerhalb und innerhalb der Linie (Δ₁ für die Kante 56, Δ₂ für die Kante 58) bestimmt.

Die so bestimmten Kenngrößen werden einem übergeordneten Programmteil übergeben, in dem die Anzahl und die Charakteristika der gefundenen Maxima mit den Ausgangswerten verglichen werden. Die im Beispiel beschriebene Linienmarkierung liefert dabei zwei Maxima mit den genannten Polaritäten und Kontrastwerten. Andere Linienmarkierungen, etwa eine helle Linie auf dunklem Untergrund, können auch umgekehrte Polarität liefern. Wird eine Kantenmarkierung oder die Randkante einer Bahn als Merkmal verwendet, so erhält man ein einziges Maximum mit einer Polarität hell -> dunkel oder dunkel -> hell.

Wird die ursprünglich eingestellte Linie oder Kante im übergeordneten Programmteil erkannt, so wird über den Digital-Analog-Wandler 36 ein Analogsignal 38 proportional zur aktuellen Linien- oder Kantenposition ausgegeben, welches in der Bahnlaufregeleinrichtung in bekannter Weise zur Führung der Materialbahn verwendet wird. Die relative Position der verfolgten Linie oder Kante kann neben anderen Statusmitteilungen auf einer Anzeigeneinrichtung, wie der LED-Anzeige 40, für den Benutzer ausgegeben werden. Wird die ursprünglich eingestellte Linie oder Kante nicht erkannt, so wird ein Fehlersignal erzeugt und beispielsweise auf der LED-Anzeige 40 angezeigt.

Die Leuchtdioden 22-1 ... 22-n werden von einem Treiber 23 einzeln oder in beliebiger Kombination angesteuert. Um die Fremdlichtempfindlichkeit des Sensors 10 zu reduzieren, werden die Leuchtdioden 22-1 ... 22-n im Ausführungsbeispiel nur in dem Zeitfenster eingeschaltet, in dem die CCD-Zeile 24 für die Aufnahme reflektieren Lichts bereit ist. Beispielsweise werden die Leuchtdioden bei einer gesamten Zykluszeit von 2 ms für Beleuchtung, Aufnahme und Auswertung nur in einem 256 µs langen Zeitfenster eingeschaltet. Dies erlaubt es, die Leuchtdioden mit einem wesentlich höheren Strom und, daraus resultierend, einer höheren Lichtausbeute zu betreiben als bei Dauerstrichbetrieb.

Um eine Vielzahl unterschiedlicher Markierungslinien zuverlässig erfassen und verfolgen zu können, sind die Leuchtdioden 22-1 ... 22-n jeweils durch superhelle, einfarbige Leuchtdioden gebildet, wobei die Gesamtheit der Leuchtdioden 22-1 ... 22-n verschiedene Farben umfasst. Beispielsweise können drei superhelle Leuchtdioden mit den Farben Rot (LED 22-1), Weiß (LED 22-2) und Rot (LED 22-3) oder vier superhelle Leuchtdioden mit den Farben Rot (LED 22-1), Blau (LED 22-2), Weiß (LED 22-3) und Rot (LED 22-4) verwendet werden.

Nach der Erfindung wird durch eine automatische Auswahl einer oder mehrerer der Leuchtdioden 22-1 ... 22-n der entsprechenden Farbe(n) das Farb- und Kontrastverhältnis der vorliegenden Kombination aus Materialbahn und Markierung berücksichtigt, um ohne weiteren Benutzereingriff eine optimal angepasste Beleuchtungskonfiguration der Leuchtdioden zu realisieren.

Dazu wird zu Beginn jeder Erfassung durch Betätigen einer entsprechenden Bedientaste 34 eine automatische Einstellung oder Kalibrierung des Sensors auf die gegenwärtig vorliegende Kombination aus Materialbahn und Markierung ausgelöst. Die Kalibrierung kann selbstverständlich auch nach einer gewissen Betriebsdauer oder bei einem Wechsel der Materialbahn/Markierungs-Kombination vorgenommen werden, um neue definierte Anfangswerte für die charakteristischen Kenngrößen zu erhalten. Alternativ kann eine Neukalibrierung auch automatisch ausgelöst werden, beispielsweise durch ein externes Steuersignal, das einen Wechsel der Materialbahn/Markierungs-Kombination anzeigt.

Auf eine manuelle oder automatische Auslösung der Kalibrierung hin steuert die Auswahleinheit 32 die Lichtquellen 22-1 ... 22-n nacheinander in verschiedenen Beleuchtungskonfigurationen an. Typischerweise werden dabei alle der möglichen Beleuchtungskonfigurationen verwendet, jedoch können durch die Programmierung auch gewisse Konfigurationen ausgeschlossen sein, beispielsweise weil sie für die Art der zu führenden Materialbahnen nicht in Betracht kommen.

Für jede der durchgespielten Beleuchtungskonfigurationen werden die charakteristischen Kenngrößen des zu erfassenden Merkmals, im Ausführungsbeispiel Kontrast, Polarität und Linienbreite wie oben beschrieben bestimmt und nach einem vorgewählten Kriterium bewertet.

Als Bewertungskriterium kann beispielsweise der Mittelwert (Δ₁ + Δ₂)/2 der Kontrastwerte der beiden Linienkanten für jede der Beleuchtungskonfigurationen bestimmt und dann diejenige Konfiguration ausgewählt werden, bei der dieser Kontrastmittelwert maximal ist. Nach einem anderen Kriterium wird die Beleuchtungskonfiguration mit dem höchsten Einzelkontrast einer der beiden Linienkanten ausgewählt.

Es hat sich jedoch herausgestellt, dass eine besonders stabile Erfassung erreicht wird, wenn jeweils der kleinere der Kontrastwerte der beiden Linienkanten bestimmt wird, Δₘᵢₙ = min(Δ₁, A₂), und dann die Beleuchtungskonfiguration mit maximalem Δₘᵢₙ ausgewählt wird.

Es versteht sich, dass je nach Markierungsart andere oder weitere Kriterien vorgegeben werden können, ohne den Rahmen der Erfindung zu verlassen. Das vorgewählte Kriterium kann auch eine komplexe, mehrstufige Bewertung beinhalten. Beispielsweise kann vorgesehen sein, dass automatisch von einer Linienerfassung auf eine Kantenerfassung umgestellt wird, wenn keiner der oben bestimmten Werte für Δₘᵢₙ gewisse Mindestanforderungen erfüllt. Für die Kantenerfassung wird dann diejenige Beleuchtungskonfiguration gewählt, die den größten Kontrastwert aufweist.

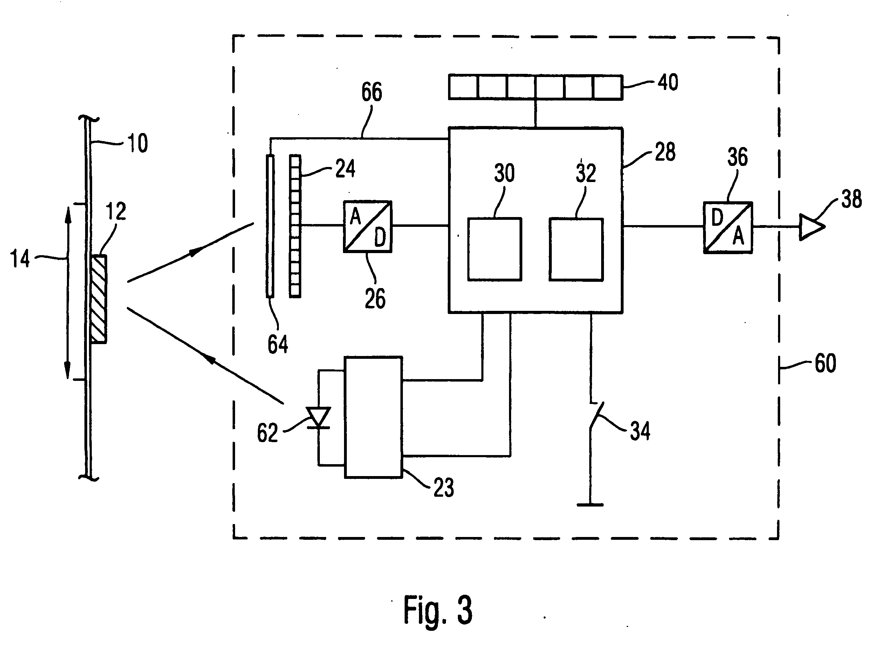

Figur 3 zeigt einen digitalen Liniensensor 60 nach einem weiteren Ausführungsbeispiel der Erfindung, Gleiche Bezugszeichen wie in Fig. 1 bezeichnen dabei gleiche Elemente. Im Unterschied zum Ausführungsbeispiel der Fig. 1 enthält der Liniensensor 60 nicht eine Mehrzahl, sondern nur eine einzige breitbandige, beispielsweise weiße Leuchtdiode 62 zur Beleuchtung des Materialbahnabschnitts 14.

Das von dem Abschnitt 14 reflektierte Licht gelangt über einen einstellbaren Farbfilter 64 auf die CCD-Zeile 24. Der einstellbare Farbfilter 64 kann beispielsweise durch ein drehbares Filterrad mit verschiedenfarbigen einzelnen Filterelementen gebildet sein, das von dem DSP 28 angesteuert wird (Bezugszeichen 66). In einer alternativen Ausgestaltung ist das Farbfilter 64 durch spannungsgesteuertes Filterelement gebildet, dessen spektrales Transmissionsverhalten sich über eine angelegte Steuerspannung variieren lässt.

Anstelle der optimalen Beleuchtungskonfiguration, wie in Fig. 1, wird bei diesem Ausführungsbeispiel die optimale Detektionskonfiguration bestimmt, also diejenige Einstellung des Farbfilters 64, mit der die höchste Bewertung für die jeweiligen charakteristischen Kenngrößen erzielt wird.

Dazu stellt die Auswahleinheit 32 bei einer Kalibrierung des Liniensensors 60 auf die aktuelle Kombination aus Materialbahn und Markierung jeweils verschiedene Filtereinstellungen des Farbfilters 64 ein. Das von dem beleuchteten Abschnitt 14 reflektierte Licht gelangt entsprechend gefiltert zur CCD-Zeile 24, wo es aufgenommen und in ein elektrisches Datensignal umgewandelt wird. Wie bei dem Ausführungsbeispiel der Fig. 1 beschrieben, werden aus dem Datensignal charakteristische Kenngrößen ermittelt und nach einem vorgegebenen Kriterium bewertet. Die Filtereinstellung mit der höchsten Bewertung, beispielsweise mit höchstem Merkmalskontrast, wird als Detektionskonfiguration für die weitere Erfassung ausgewählt.

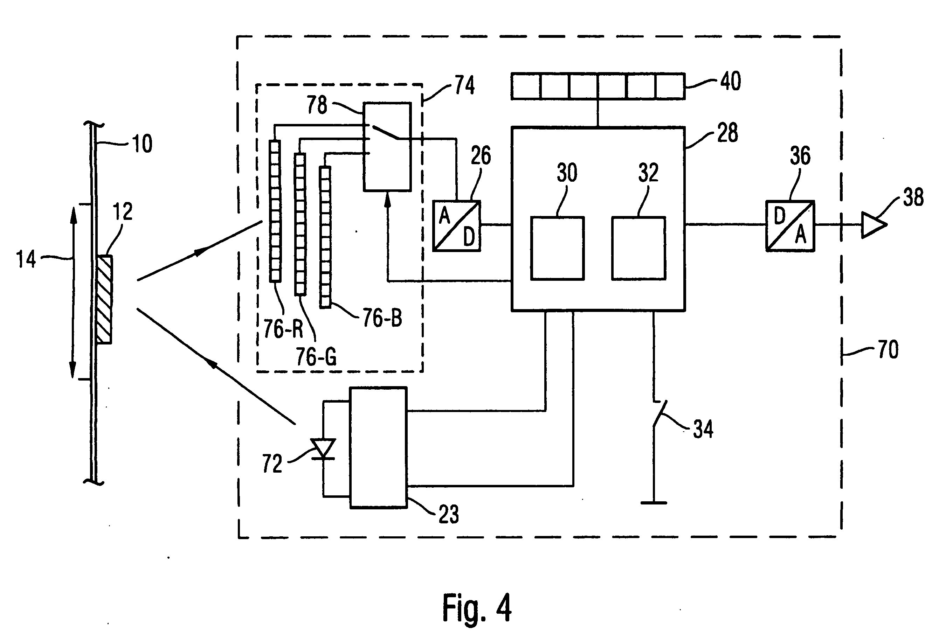

Ein weiteres Ausführungsbeispiel der Erfindung ist in Fig. 4 gezeigt. Der digitale Liniensensor 70 weist, wie der Liniensensor 60 der Fig. 3, lediglich eine einzige breitbandige Leuchtdiode 72 zur Beleuchtung des Materialbahnabschnitts 14 auf. Das von der Materialbahn reflektierte Licht wird von einer Detektionseinheit 74 aufgenommen, die drei CCD-Zeilen 76-R, 76-G und 76-B mit maximalen Empfindlichkeiten im roten (76-R), grünen (76-G) bzw. blauen (76-B) Spektralbereich enthält. Ein von dem DSP 28 angesteuerter Multiplexer 78 legt fest, welche der CCD-Zeilen ausgelesen wird. Beispielsweise wird in der Situation der Fig. 4 die rotempfindliche CCD-Zeile 76-R ausgelesen und nur ihre Datensignale zum Analog-Digital-Wandler 26 geleitet. Dies kann beispielsweise bei einer blauen oder grünen Markierungslinie auf weißem Grund vorteilhaft sein, da die Markierungslinie der rotempfindlichen CCD-Zeile mit höchstem Kontrast erscheint.

Um die günstigste CCD-Zeile automatisch auszuwählen, wird zu Beginn der Erfassung eine Kalibrierung des Sensors 70 durchgeführt. Dazu steuert die Auswahleinheit 32 die Leuchtdiode 72 und den Multiplexer 78 so an, dass die CCD-Zeilen 76-R, 76-G und 76-B nacheinander bei konstanter Beleuchtung ausgelesen werden. Die CCD-Zeile, aus deren Datensignalen sich die höchste Bewertung für die charakteristischen Kenngrößen ergibt, wird für die weitere Erfassung ausgewählt.

Die beschriebene automatische Bestimmung der optimalen Beleuchtungskonfiguration oder der optimalen Detektionskonfiguration führt gegenüber einer vom Benutzer vorzugebenden Auswahl zu einer wesentlich zuverlässigeren und robusteren Merkmalserfassung, da die komplexen Wechselwirkungen zwischen der Art und Farbe der Materialbahn, der Art und Farbe der aufgebrachten Markierung, der Farbe bzw. der spektralen Verteilung der Beleuchtungsquellen, der Beleuchtungsgeometrie und der Ausleuchtung des Merkmalsbereichs für das menschliche Auge schwer zu beurteilen sind, durch das erfindungsgemäße Verfahren aber ohne weiteres korrekt berücksichtigt werden.

Während die Erfindung insbesondere mit Bezug auf bevorzugte Ausführungsbeispiele gezeigt und beschrieben worden ist, versteht sich für den Fachmann, dass Änderungen in Gestalt und Einzelheiten gemacht werden können, ohne von dem Gedanken und Umfang der Erfindung abzuweichen. Beispielsweise sind die Lichtquellen, die Detektionseinheit, die Auswerteeinheit und die Auswahleinheit in den Ausführungsbeispielen jeweils in einem gemeinsamen Sensorgehäuse zusammengefasst. Es versteht es sich jedoch, dass diese Einheiten auch als räumlich getrennte zusammenwirkende Einheiten ausgebildet sein können.

Auch kann eine Einheit mehr als eine Funktion übernehmen. So enthält in den Ausführungsbeispielen der digitale Signalprozessor sowohl die Auswerteeinheit als auch die Auswahleinheit. In einer anderen Ausgestaltung könnte beispielsweise eine "intelligente" CCD-Zeile neben der Aufnahme des Lichts auch die Bestimmung der charakteristischen Kenngrößen übernehmen, und so sowohl als Detektionseinheit als auch als Auswerteeinheit fungieren.

Dementsprechend soll die Offenbarung der vorliegenden Erfindung nicht einschränkend sein. Statt dessen soll die Offenbarung der vorliegenden Erfindung den Umfang der Erfindung veranschaulichen, der in den nachfolgenden Ansprüchen dargelegt ist.

## Patentansprüche

1. Vorrichtung zur Erfassung eines sich im Wesentlichen in Bahnlängsrichtung erstreckenden Merkmals einer laufenden Materialbahn, insbesondere der Randkante der Bahn oder einer aufgebrachten Markierungslinie, mit
- einer Mehrzahl einzeln ansteuerbarer Lichtquellen zur Beleuchtung eines das zu erfassende Merkmal enthaltenden Abschnitts der Materialbahn in einer von mehreren verschiedenen Beleuchtungskonfigurationen,
- wobei die Mehrzahl der einzeln ansteuerbareren Lichtquellen Leuchtdioden verschiedener Farben umfasst,
- einer ortsauflösenden Detektionseinheit zur Aufnahme des von dem beleuchteten Abschnitt als optische Antwort emittierten Lichts und zur Übermittlung eines dem aufgenommenen Licht entsprechenden Datensignals an eine Auswerteeinheit,
**gekennzeichnet durch**
- eine Auswerteeinheit zur Bestimmung einer oder mehrerer charakteristischer Kenngrößen des zu erfassenden Merkmals aus dem übermittelten Datensignal, und
- eine Auswahleinheit zur automatischen Bestimmung einer optimalen Beleuchtungskonfiguration, die ausgelegt und eingerichtet ist, die Lichtquellen mit den verschiedenfarbigen Leuchtdioden in verschiedenen Beleuchtungskonfigurationen anzusteuern, die jeweils bestimmten charakteristischen Kenngrößen des zu erfassenden Merkmals nach einem vorgewählten Kriterium zu bewerten und auf Grundlage dieser Bewertung die optimale Beleuchtungskonfiguration für die weitere Erfassung zu bestimmen.

2. Vorrichtung nach Anspruch 1, **dadurch gekennzeichnet, dass** die einzeln ansteuerbaren Lichtquellen durch einfarbige Leuchtdioden gebildet sind.

3. Vorrichtung nach Anspruch 1 oder 2, **dadurch gekennzeichnet, dass** die einzeln ansteuerbaren Lichtquellen in verschiedenen Positionen relativ zu dem zu erfassenden Merkmal angeordnet sind.

4. Vorrichtung nach einem der Ansprüche 1 bis 3, **dadurch gekennzeichnet, dass** die ortsauflösende Detektionseinheit durch eine Mehrzahl nebeneinander angeordneter Photodioden oder durch eine Mehrzahl nebeneinander angeordneter CCD-Elemente, insbesondere durch eine CCD-Zelle gebildet ist.

5. Vorrichtung nach einem der Ansprüche 1 bis 4, **dadurch gekennzeichnet, dass** die Auswerteeinheit zur Bestimmung der charakteristischen Kenngrößen einen digitalen Signalprozessor enthält.

6. Vorrichtung nach einem der Ansprüche 1 bis 5, **dadurch gekennzeichnet, dass** die Auswerteeinheit als charakteristische Kenngrößen den Merkmalskontrast in Bahnquerrichtung und gegebenenfalls als weitere Kenngrößen die Polarität des Helligkeitswechsels des Merkmals in Bahnquerrichtung und/oder die Linienbreite einer aufgebrachten Markierungslinie bestimmt.

7. Vorrichtung nach Anspruch 6, **dadurch gekennzeichnet, dass** die Auswahleinheit die Beleuchtungskonfiguration mit maximalem Merkmalskontrast als optimale Beleuchtungskonfiguration für die weitere Erfassung bestimmt.

8. Verfahren zur Erfassung eines sich im Wesentlichen in Bahnlängsrichtung erstreckenden Merkmals einer laufenden Materialbahn, insbesondere der Randkante der Bahn oder einer aufgebrachten Markierungslinie, bei dem
- ein das zu erfassende Merkmal enthaltender Abschnitt der Materialbahn von einer oder mehreren einzeln ansteuerbaren Lichtquellen In einer ausgewählten Beleuchtungskonfiguration beleuchtet wird,
- wobei die einzeln ansteuerbareren Lichtquellen Leuchtdioden verschiedener Farben umfassen,
- das von dem beleuchteten Abschnitt als optische Antwort emittierte Licht ortsaufgelöst erfasst wird, und ein dem aufgenommenen Licht entsprechendes Datensignal erzeugt wird,
**gekennzeichnet dadurch, dass**
- aus dem erzeugten Datensignal eine oder mehrere charakteristische Kenngrößen des zu erfassenden Merkmals bestimmt werden, und dass
- zur automatischen Bestimmung einer optimalen Beleuchtungskonfiguration die Lichtquellen mit den verschiedenfarbigen Leuchtdioden in verschiedenen Beleuchtungskonfigurationen angesteuert werden, die jeweils bestimmten charakteristischen Kenngrößen des zu erfassenden Merkmals nach einem vorgewählten Kriterium bewertet werden und auf Grundlage dieser Bewertung die optimale Beleuchtungskonfiguration für die weitere Erfassung bestimmt wird.

9. Verfahren nach Anspruch 8, **dadurch gekennzeichnet, dass** die als optimal bestimmte Beleuchtungskonfiguration automatisch für die weitere Erfassung eingestellt wird.

10. Verfahren nach Anspruch 8 oder 9, **dadurch gekennzeichnet, dass** die automatische Bestimmung der optimalen Beleuchtungskonfiguration einmalig oder zwischenzeitig auf Benutzeranforderung ausgeführt wird.

11. Verfahren nach einem der Ansprüche 8 bis 10, **dadurch gekennzeichnet, dass** als charakteristische Kenngrößen der Merkmalskontrast in Bahnquerrichtung und gegebenenfalls als weitere Kenngrößen die Polarität des Helligkeitswechsels des Merkmals in Bahnquerrichtung und/oder die Linienbreite einer aufgedruckten Markierungslinie bestimmt werden.

12. Verfahren nach Anspruch 11, **dadurch gekennzeichnet, dass** bei der automatischen Bestimmung die Beleuchtungskonfiguration mit maximalem Merkmalskontrast als optimale Beleuchtungskonfiguration für die weitere Erfassung bestimmt wird.

13. Vorrichtung zur Erfassung eines sich im Wesentlichen in Bahnlängsrichtung erstreckenden Merkmals einer laufenden Materialbahn, insbesondere der Randkante der Bahn oder einer aufgebrachten Markierungslinie, insbesondere nach einem der Ansprüche 1 bis 7, mit
- einer Beleuchtungseinheit zur Beleuchtung eines das zu erfassende Merkmal enthaltenden Abschnitts der Materialbahn,
- einer ortsauflösenden Detektionseinheit zur Aufnahme des von dem beleuchteten Abschnitt als optische Antwort emittierten Lichts in einer von mehreren verschiedenen einstellbaren Detektionskonfigurationen, und zur Übermittlung eines dem aufgenommenen Licht entsprechenden Datensignals an eine Auswerteeinheit,
**gekennzeichnet durch**
- eine Auswerteeinheit zur Bestimmung einer oder mehrerer charakteristischer Kenngrößen des zu erfassenden Merkmals aus dem übermittelten Datensignal, und
- eine Auswahleinheit zur automatischen Bestimmung einer optimalen Detektionskonfiguration, die ausgelegt und eingerichtet ist, die Detektionseinheit in verschiedenen der einstellbaren Detektionskonfigurationen anzusteuem, die jeweils bestimmten charakteristischen Kenngrößen des zu erfassenden Merkmals nach einem vorgewählten Kriterium zu bewerten und auf Grundlage dieser Bewertung die optimale Detektionskonfiguration für die weitere Erfassung zu bestimmen.

14. Vorrichtung nach Anspruch 13, **dadurch gekennzeichnet, dass** die Detektionseinheit ein einstellbares Farbfilter enthält, dessen verschiedene Filtereinstellungen zu den verschiedenen einstellbaren Detektionskonfigurationen führen.

15. Vorrichtung nach Anspruch 13, **dadurch gekennzeichnet, dass** die Detektionseinheit mehrere wahlweise auslesbare Detektionselemente mit verschiedener spektraler Empfindlichkeit enthält, bei der die Auswahl der auszulesenden Detektionselemente zu den verschiedenen einstellbaren Detektionskonfigurationen führt.

16. Verfahren zur Erfassung eines sich im Wesentlichen in Bahnlängsrichtung erstreckenden Merkmals einer laufenden Materialbahn, insbesondere der Randkante der Bahn oder einer aufgebrachten Markierungslinie, bei dem
- ein das zu erfassende Merkmal enthaltender Abschnitt der Materialbahn beleuchtet wird,
- das von dem beleuchteten Abschnitt als optische Antwort emittierte Licht in einer von mehreren verschiedenen einstellbaren Detektionskonfigurationen ortsaufgelöst erfasst wird, und ein dem aufgenommenen Licht entsprechendes Datensignal erzeugt wird,
**gekennzeichnet dadurch, dass**
- aus dem erzeugten Datensignal eine oder mehrere charakteristische Kenngrößen des zu erfassenden Merkmals bestimmt werden, und dass
- zur automatischen Bestimmung einer optimalen Detektionskonfiguration die Detektionseinheit in verschiedenen der einstellbaren Detektionskonfigurationen angesteuert wird, die jeweils bestimmten charakteristischen Kenngrößen des zu erfassenden Merkmals nach einem vorgewählten Kriterium bewertet werden und auf Grundlage dieser Bewertung die optimale Detektionskonfiguration für die weitere Erfassung bestimmt wird.

17. Verfahren zur Erfassung eines sich im Wesentlichen in Bahnlängsrichtung erstreckenden Merkmals einer laufenden Materialbahn, insbesondere der Randkante der Bahn oder einer aufgebrachten Markierungslinie, bei dem
- ein das zu erfassende Merkmals enthaltender Abschnitt der Materialbahn von einer oder mehreren einzeln ansteuerbaren Lichtquellen in einer ausgewählten Beleuchtungskonfiguration beleuchtet wird,
**gekennzeichnet dadurch, dass**
- das von dem beleuchteten Abschnitt als optische Antwort emittierte Licht in einer von mehreren verschiedenen einstellbaren Detektionskonfigurationen ortsaufgelöst erfasst wird, und ein dem aufgenommenen Licht entsprechendes Datensignal erzeugt wird, dass
- aus dem erzeugten Datensignal eine oder mehrere charakteristische Kenngrößen des zu erfassenden Merkmals bestimmt werden, und dass
- zur automatischen Bestimmung einer optimalen Kombination von Beleuchtungskonfiguration und Detektionskonfiguration
-- die Lichtquellen in verschiedenen Beleuchtungskonfigurationen angesteuert werden,
-- für jede Beleuchtungskonfiguration die Detektionseinheit in verschiedenen der einstellbaren Detektionskonfigurationen angesteuert wird,
-- die jeweils bestimmten charakteristischen Kenngrößen des zu erfassenden Merkmals nach einem vorgewählten Kriterium bewertet werden, und
-- auf Grundlage dieser Bewertung die optimale Kombination von Beleuchtungskonfiguration und Detektionskonfiguration für die weitere Erfassung bestimmt wird.

## Claims

1. An apparatus for detecting a substantially longitudinally extending feature of a running material web, especially the side edge of the web or an applied marker line, having
- a plurality of individually addressable light sources for illuminating, in one of multiple different lighting configurations, a section of the material web containing the feature to be detected,
- the plurality of individually addressable light sources comprising light-emitting diodes of different colors,
- a spatially resolving detection unit for recording the light emitted by the illuminated section as an optical response and for transmitting to an analysis unit a data signal corresponding to the recorded light,
**characterized by**
- an analysis unit for determining from the transmitted data signal one or more characteristic parameters of the feature to be detected, and
- for automatically determining an optimal lighting configuration, a selection unit that is arranged and adapted to address the light sources with the light-emitting diodes of different colors in different lighting configurations, to rate according to a preselected criterion the characteristic parameters determined in each case for the feature to be detected, and based on this rating, to determine the optimal lighting configuration for further detection.

2. The apparatus according to claim 1, **characterized in that** the individually addressable light sources are formed by monochrome light-emitting diodes.

3. The apparatus according to claim 1 or 2, **characterized in that** the individually addressable light sources are disposed in various positions relative to the feature to be detected.

4. The apparatus according to any of claims 1 to 3, **characterized in that** the spatially resolving detection unit is formed by a plurality of photodiodes disposed side by side, or by a plurality of CCD elements disposed side by side, especially by a CCD line array.

5. The apparatus according to any of claims 1 to 4, **characterized in that** the analysis unit for determining the characteristic parameters includes a digital signal processor.

6. The apparatus according to any of claims 1 to 5, **characterized in that** the analysis unit determines, as characteristic parameters, the feature contrast in the cross-web direction and, if appropriate, as additional parameters, the polarity of the change in lightness of the feature in the cross-web direction and/or the line width of an applied marker line.

7. The apparatus according to claim 6, **characterized in that** the selection unit determines the lighting configuration with maximum feature contrast as the optimal lighting configuration for further detection.

8. A method for detecting a substantially longitudinally extending feature of a running material web, especially the side edge of the web or an applied marker line, in which
- a section of the material web containing the feature to be detected is illuminated by one or more individually addressable light sources in a selected lighting configuration,
- the plurality of individually addressable light sources comprising light-emitting diodes of different colors,
- the light emitted by the illuminated section as an optical response is detected, spatially resolved, and a data signal corresponding to the recorded light is generated,
**characterized in that**
- one or more characteristic parameters of the feature to be detected are determined from the data signal generated, and that
- for automatically determining an optimal lighting configuration, the light sources with the light-emitting diodes of different colors are addressed in different lighting configurations, the characteristic parameters determined in each case for the feature to be detected are rated according to a preselected criterion, and based on this rating, the optimal lighting configuration for further detection is determined.

9. The method according to claim 8, **characterized in that** the lighting configuration determined to be optimal is automatically set for further detection.

10. The method according to claim 8 or 9, **characterized in that** the automatic determination of the optimal lighting configuration is carried out once or at intervals on user demand.

11. The method according to any of claims 8 to 10, **characterized in that** the feature contrast in the cross-web direction is determined as the characteristic parameter and, if appropriate, as additional parameters, the polarity of the change in lightness of the feature in the cross-web direction and/or the line width of an applied marker line.

12. The method according to claim 11, **characterized in that**, in the automatic determination, the lighting configuration with maximum feature contrast is determined as the optimal lighting configuration for further detection.

13. An apparatus for detecting a substantially longitudinally extending feature of a running material web, especially the side edge of the web or an applied marker line, especially according to any of claims 1 to 7, having
- an illumination unit for illuminating a section of the material web containing the feature to be detected,
- a spatially resolving detection unit for recording the light emitted by the illuminated section as an optical response in one of multiple different settable detection configurations, and for transmitting to an analysis unit a data signal corresponding to the recorded light,
**characterized by**
- an analysis unit for determining from the transmitted data signal one or more characteristic parameters of the feature to be detected, and
- for automatically determining an optimal detection configuration, a selection unit that is arranged and adapted to address the detection unit in different of the settable detection configurations, to rate according to a preselected criterion the characteristic parameters determined in each case for the feature to be detected, and based on this rating, to determine the optimal detection configuration for further detection.

14. The apparatus according to claim 13, **characterized in that** the detection unit includes a settable color filter whose different filter settings result in the different settable detection configurations.

15. The apparatus according to claim 13, **characterized in that** the detection unit includes multiple detection elements that can be read out selectively and have different spectral sensitivity, in which unit the selection of the detection elements to be read out results in the different settable detection configurations.

16. A method for detecting a substantially longitudinally extending feature of a running material web, especially the side edge of the web or an applied marker line, in which
- a section of the material web containing the feature to be detected is illuminated,
- the light emitted by the illuminated section as an optical response is detected, spatially resolved, in one of multiple different settable detection configurations, and a data signal corresponding to the recorded light is generated,
**characterized in that**
- one or more characteristic parameters of the feature to be detected are determined from the data signal generated, and that
- for automatically determining an optimal detection configuration, the detection unit is addressed in different of the settable detection configurations, the characteristic parameters determined in each case for the feature to be detected are rated according to a preselected criterion, and based on this rating, the optimal detection configuration for further detection is determined.

17. A method for detecting a substantially longitudinally extending feature of a running material web, especially the side edge of the web or an applied marker line, in which
- a section of the material web containing the feature to be detected is illuminated by one or more individually addressable light sources in a selected lighting configuration,
**characterized in that**
- the light emitted by the illuminated section as an optical response is detected, spatially resolved, in one of multiple different settable detection configurations, and a data signal corresponding to the recorded light is generated, that
- one or more characteristic parameters of the feature to be detected are determined from the data signal generated, and that
- for automatically determining an optimal combination of lighting configuration and detection configuration,
-- the light sources are addressed in different lighting configurations,
-- for each lighting configuration, the detection unit is addressed in different of the settable detection configurations,
-- the characteristic parameters determined in each case for the feature to be detected are rated according to a preselected criterion, and
-- based on this rating, the optimal combination of lighting configuration and detection configuration for further detection is determined.

## Revendications

1. Dispositif pour détecter une caractéristique, s'étendant pour l'essentiel dans la direction longitudinale de la bande, d'une bande de matériau en mouvement, en particulier de l'arête marginale de la bande ou d'une ligne de marquage disposée sur cette dernière, comportant :
- un grand nombre de sources lumineuses, excitables individuellement, pour éclairer un tronçon, contenant la caractéristique à détecter, de la bande de matériau, selon l'une de plusieurs différentes configurations d'éclairage,
- le grand nombre des sources lumineuses excitables individuellement comprenant des diodes électroluminescentes ayant différentes couleurs,
- une unité de détection à résolution spatiale, pour recevoir sous forme d'une réponse optique la lumière émise par le tronçon éclairé, et transmettre un signal de données, correspondant à la lumière reçue, à une unité d'évaluation,
**caractérisé par**
- une unité d'évaluation, pour déterminer un ou plusieurs paramètres caractéristiques de la caractéristique à détecter, à partir du signal de données transmis, et
- une unité de sélection, pour déterminer automatiquement une configuration optimale d'éclairage, qui est configurée et arrangée de façon à exciter les sources lumineuses, comportant des diodes électroluminescentes ayant différentes couleurs, selon différentes configurations d'éclairage, évaluer les paramètres caractéristiques, déterminés pour chacune des caractéristiques à déterminer, selon un critère présélectionné, et, sur la base de cette évaluation, déterminer la configuration d'éclairage optimale pour la suite de la détection.

2. Dispositif selon la revendication 1, **caractérisé en ce que** les sources lumineuses excitables individuellement sont formées de diodes électroluminescentes unicolores.

3. Dispositif selon la revendication 1 ou 2, **caractérisé en ce que** les sources lumineuses excitables individuellement sont disposées sur différentes positions par rapport à la caractéristique à détecter.

4. Dispositif selon l'une des revendications 1 à 3, **caractérisé en ce que** l'unité de détection à résolution spatiale est formée d'un grand nombre de photodiodes disposées les unes à côté des autres ou d'un grand nombre d'éléments CCD disposés les uns à côté des autres, en particulier d'une cellule CCD.

5. Dispositif selon l'une des revendications 1 à 4, **caractérisé en ce que** l'unité d'évaluation pour détecter les paramètres caractéristiques contient un processeur de signaux numériques.

6. Dispositif selon l'une des revendications 1 à 5, **caractérisé en ce que** l'unité d'évaluation détermine, en tant que paramètres caractéristiques, le contraste de caractéristiques dans la direction transversale de la bande, et éventuellement, en tant qu'autres paramètres, la polarité du changement de luminosité de la caractéristique dans la direction transversale de la bande et/ou la largeur de ligne d'une ligne de marquage déposée.

7. Dispositif selon la revendication 6, **caractérisé en ce que** l'unité d'évaluation détermine la configuration d'éclairage avec un contraste maximal de caractéristiques, en tant que configuration d'éclairage optimale pour la suite de la détection.

8. Procédé pour détecter une caractéristique, s'étendant pour l'essentiel dans la direction longitudinale de la bande, d'une bande de matériau en mouvement, en particulier de l'arête marginale de la bande ou d'une ligne de marquage déposée sur cette dernière, dans lequel :
- on éclaire, selon une configuration d'éclairage sélectionnée, un tronçon, contenant la caractéristique à détecter, de la bande de matériau, par une ou plusieurs sources lumineuses excitables individuellement,
- les sources lumineuses excitables individuellement étant des diodes électroluminescentes ayant différentes couleurs,
- on détecte avec une résolution spatiale la lumière émise en tant que réponse optique par le tronçon éclairé, et on produit un signal de données correspondant à la lumière reçue,
**caractérisé en ce que**
- à partir du signal de données produit, on détermine un ou plusieurs paramètres caractéristiques de la caractéristique à détecter, et **en ce que**
- pour la détermination automatique d'une configuration optimale d'éclairage, on excite les sources lumineuses, comportant les diodes électroluminescentes ayant différentes couleurs, selon différentes configurations d'éclairage, on évalue selon un critère présélectionné les paramètres caractéristiques, déterminés pour chaque caractéristique à détecter, et, sur la base de cette évaluation, on détennine la configuration optimale d'éclairage pour la suite de la détection.

9. Procédé selon la revendication 8, **caractérisé en ce que** la configuration d'éclairage déterminée comme étant optimale est ajustée automatiquement pour la suite de la détection.

10. Procédé selon la revendication 8 ou 9, **caractérisé en ce que** la détermination automatique de la configuration optimale d'éclairage est réalisée en une fois, ou d'une manière intermédiaire à la demande de l'utilisateur.

11. Procédé selon l'une des revendications 8 à 10, **caractérisé en ce que**, en tant que paramètres caractéristiques, on détermine le contraste de caractéristiques dans la direction transversale de la bande, et, éventuellement, en tant qu'autres paramètres, la polarité du changement de luminosité de la caractéristique dans la direction transversale de la bande et/ou la largeur de ligne d'une ligne de marquage déposée.

12. Procédé selon la revendication 11, **caractérisé en ce que**, lors de la détermination automatique, on détermine la configuration d'éclairage avec un contraste maximal de caractéristiques, en tant que configuration optimale d'éclairage pour la suite de la détection.

13. Dispositif pour détecter une caractéristique, s'étendant pour l'essentiel dans la direction longitudinale de la bande, d'une bande de matériau en mouvement, en particulier de l'arête marginale de la bande ou d'une ligne de marquage déposée sur cette dernière, en particulier selon l'une des revendications 1 à 7, comportant
- une unité d'éclairage, pour éclairer un tronçon, contenant la caractéristique à détecter, de la bande de matériau,
- une unité de détection à résolution spatiale, pour recevoir la lumière, émise en tant que réponse optique par le tronçon éclairé, selon l'une de plusieurs différentes configurations de détection pouvant être ajustées, et transmettre à une unité d'évaluation un signal de données correspondant à la lumière reçue, **caractérisé par**
- une unité d'évaluation, pour déterminer un ou plusieurs paramètres caractéristiques de la caractéristique à détecter, à partir du signal de données transmis, et
- une unité d'évaluation, pour la détermination automatique d'une configuration optimale de détection, qui est configurée et arrangée de façon à exciter l'unité de détection selon différentes configurations de détection pouvant être ajustées, à évaluer, selon un critère présélectionné, les paramètres caractéristiques, déterminés pour chaque caractéristique à détecter, et à déterminer, sur la base de cette évaluation, la configuration de détection optimale pour la suite de la détection.

14. Dispositif selon la revendication 13, **caractérisé en ce que** l'unité de détection contient un filtre coloré réglable, dont les différents réglages du filtre conduisent aux différentes configurations de détection pouvant être ajustées.

15. Dispositif selon la revendication 13, **caractérisé en ce que** l'unité de détection contient plusieurs éléments de détection, pouvant être lus au choix, ayant différentes sensibilités spectrales, le choix des éléments de détection devant être lus conduisant aux différentes configurations de détection pouvant être ajustées.

16. Procédé pour détecter une caractéristique, s'étendant pour l'essentiel dans la direction longitudinale de la bande, d'une bande de matériau en mouvement, en particulier de l'arête marginale de la bande ou d'une ligne de marquage déposée sur cette dernière, dans lequel
- on éclaire un tronçon, contenant la caractéristique à détecter, de la bande de matériau,
- on détermine avec une résolution spatiale la lumière, émise en tant que réponse optique par le tronçon éclairé, selon l'une de plusieurs différentes configurations de détection pouvant être ajustées, et on produit un signal de données correspondant à la lumière reçue, **caractérisé en ce que**
- à partir du signal de données produit, on déterminé un ou plusieurs paramètres caractéristiques de la caractéristique à détecter, et **en ce que**
- pour la détection automatique d'une configuration optimale de détection, on excite l'unité de détection selon différentes configurations de détection pouvant être ajustées, on évalue, selon un critère présélectionné, les paramètres caractéristiques déterminés pour chaque caractéristique à détecter, et, sur la base de cette évaluation, on détermine la configuration de détection optimale pour la suite de la détection.

17. Procédé pour détecter une caractéristique, s'étendant pour l'essentiel dans la direction longitudinale de la bande, d'une bande de matériau en mouvement, en particulier de l'arête marginale de la bande ou d'une ligne de marquage déposée sur cette dernière, dans lequel
- on éclaire selon une configuration sélectionnée d'éclairage un tronçon, contenant la caractéristique à détecter, de la bande de matériau, par une ou plusieurs sources lumineuses excitables individuellement, **caractérisé en ce que**
- on détermine avec une résolution spatiale la lumière émise en tant que réponse optique par le tronçon éclairé, selon l'une de plusieurs différentes configurations de détection pouvant être ajustées, et on produit un signal de données correspondant à la lumière émise,
- **en ce que**, à partir du signal de données produit, on détermine un ou plusieurs paramètres caractéristiques de la caractéristique à détecter, et
- **en ce que**, pour la détermination automatique d'une combinaison optimale d'une configuration d'éclairage et d'une configuration de détection,
- on excite les sources lumineuses selon différentes configurations d'éclairage,
- pour chaque configuration d'éclairage, on excite l'unité d'excitation selon plusieurs des configurations réglables de détection,
- on évalue, selon un critère présélectionné, les paramètres caractéristiques, déterminés pour chaque caractéristique à détecter, et
- sur la base de cette évaluation, on détermine la combinaison d'une configuration d'éclairage et d'une configuration de détection, qui est optimale pour la suite de la détection.
